# EUROPEAN PATENT APPLICATION

(11) **EP 3 232 317 A1**
(43) Date of publication of application: **18.10.2017**
(21) Application number: 17165246.4
(22) Date of filing: 06.04.2017
(51) Int. Cl.: G06F 3/12

(54) **JOB MANAGEMENT SYSTEM**

(30) Priority: 13.04.2016 EP 16164993
(71) Applicant: OCE Holding B.V., 5914 CA Venlo (NL)
(72) Inventor: STEUX, Jean Marc C.A., 5914 CA Venlo (NL)
(74) Representative: OCE IP Department

(57) **Abstract**

An electronic job management system (12) for an image reproduction system comprising a plurality of processing units (14) for forming print products, the management system being arranged to:
- store a set of capabilities and capability constraints for each processing unit (14);
- receive a job specification (18) for a print job;
- derive required processing operations and attributes from the job specification; and
- check whether the required processing operations and attributes match the capabilities and constraints of at least one selection of processing units from the processing units (14) available in the image reproduction system,
characterized in that the management system is further arranged to:
- store quality ratings for each of a plurality of different combinations of processing units, processing operations and attributes, each quality rating having a value selected from among at least three different values; and
- if the check for matching processing operations and attributes was successful for at least one selection of processing units, and if at least one quality rating is available for that selection in combination with the processing operations and attributes, determine, on the basis of the stored quality ratings , an expected quality value (30) for the resulting print products.

## Description

The present invention relates to an electronic job management system for an image reproduction system comprising a plurality of processing units for forming print products, the management system being arranged to:
- store a set of capabilities and capability constraints for each processing unit;
- receive a job specification for a print job;
- derive required processing operations and attributes form the job specification; and
- check whether the required processing operations and attributes match the capabilities and constraints of at least one selection of processing units from the processing units available in the image reproduction system.

An example of a job management system of this type has been described in US 7 454 757 B2. This system permits to determine in advance whether or not a print job with given job specifications can be printed with the facilities that are available in the image reproduction system. The system may also help to identify the processing units, e.g. printers, finishers and the like, which are best suited for processing the print job.

It is an object of the present invention to provide a job management system that can assist a user or operator in optimizing the quality of the print products.

In order to achieve this object, the management system according to the present invention is further arranged to:
- store quality ratings for each of a plurality of different combinations of processing units, processing operations and attributes, each quality rating having a value selected from among at least three different values; and
- if the check for matching processing operations and attributes was successful for at least one selection of processing units, and if at least one quality rating is available for that selection in combination with the processing operations and attributes, determine, on the basis of the stored quality ratings, an expected quality value for the resulting print products.

Thus, the management system according to the present invention is capable of predicting a quality value of the print products that will be obtained by processing a given print job.

The expected quality value may be indicated to the operator or user, who may then decide whether he or she wants to use this image reproduction system for processing the print job or prefers to look for another image reproduction system. As an alternative, the system may be configured to reject a print job if the expected quality value is below a pre-defined threshold.

In any case, the likelihood of obtaining print products with a non-satisfactory quality is reduced significantly, and the production of waste may be reduced accordingly.

More specific optional features of the present invention are indicated in the dependent claims.

The multi-valued quality ratings as well as the expected quality values may be represented by numerical values which may for example be taken from a finite set (with at least three elements) of integral values such as the numbers from 1 to 5, with "1" designating the lowest quality ("very bad"), "2" meaning "bad", "3" meaning "sufficient", "4" meaning "good" and "5" meaning "very good", for example.

In the context of the present invention, the term "processing operation" means an operation such as printing, stapling or stitching to be performed by a suitable processing unit, i.e. a printer in the case of printing and a finisher in the case of stapling or stitching. A processing operation may be specified further by one or more attributes. For example, the processing (finishing) operation of forming a saddle stitched booklet may have as attributes the "number of sheets" that compose the booklet as a first attribute and the "paper weight" of the sheets as another attribute. In general, the quality ratings and expected quality values will be different for different values of a given attribute and, in case of an operation with two or more attributes, it may also be different for different combinations of values of the attributes.

When the quality ratings and quality values are represented by numerical values, it is possible to use interpolation and extrapolation techniques in order to calculate an expected quality value for a given operation with a given value of an attribute, even if no quality rating is available for that particular value of the attribute, provided only that two or more quality ratings are available for other values of the same attribute.

When an operation has two or more attributes, each attribute may limit the achievable quality in a specific way. The quality ratings will generally provide different quality values for the different attributes, depending upon the respective values of the attributes, but it is possible to combine these quality values by minimum selection in order to obtain an expected quality value that characterizes the quality of the print produce as a whole.

It will be understood that each of the quality ratings stored in the management system applies to a specific selection of processing units, the selection comprising all processing units that participate in the processing of the print job. Thus, a selection may comprise only a printer if the print job consists only in printing a document, and it may comprise a combination of a printer and a finisher if the print job comprises printing and finishing a document. In many cases, it may be sufficient to store quality ratings for each individual processing unit. There may be cases however, in which the quality of the print product depends also on an amount of compatibility between the involved processing units, e.g. the printer and the finisher. In that case, quality ratings may also be stored for the different combinations of processing units.

The image reproduction system may comprise more than one processing unit or more than one combination of processing units that pass the check for match between the processing operations and the capabilities and constraints, so that the user or the operator has a choice as to which selection of processing units shall be used. In that case, it is preferred that the management system determines an expected quality value for each selection. The quality values thus determined may be displayed to the user in order to assist the user in making his choice in accordance with his personal quality requirements and possibly in accordance with other criteria such as productivity and the like. In another embodiment, the management system may automatically choose the selection of processing units that is expected to provide the highest quality.

The quality ratings for the different processing units may be provided for example by the manufacturers of the respective processing units. They may however also be provided by other users of the same processing units. For example, the users of image reproduction systems may send quality ratings to a cloud-based database, so that the quality ratings for the possible selections of processing units in a specific job management system may be downloaded from the cloud.

For a given processing unit, there may be quality ratings from different sources, and these quality ratings need not be identical. In that case, the job management system may store an average of the quality ratings, possibly based on a selection weighting of sources that are considered to be most reliable.

If the job management system receives a print job for which no estimated quality value can be determined because of lack of pertinent quality ratings, then the user interface of the job management system may encourage the user to start the print process or to start at least a test print and then to make a quality assessment himself, so as to provide a quality rating that may then be added to the quality ratings stored already in the management system and/or to the data base in the cloud.

Embodiment examples will now be described in conjunction with the drawings, wherein:
- Fig. 1: is a block diagram of an image reproduction system including a job management system according to the invention;
- Fig. 2 to 5: are examples of quality ratings stored in the job management system;
- Fig. 6: is an example of a quality estimate based on the ratings shown in Figs. 2 to 5;
- Fig. 7: is a flow diagram of a job management method according to the invention;
- Fig. 8: is a flow diagram of a sub-routine called up in steps S6 and S10 in Fig. 7; and
- Fig. 9: is a flow diagram of a sub-routine called up in steps S62 and S65 in Fig. 8.

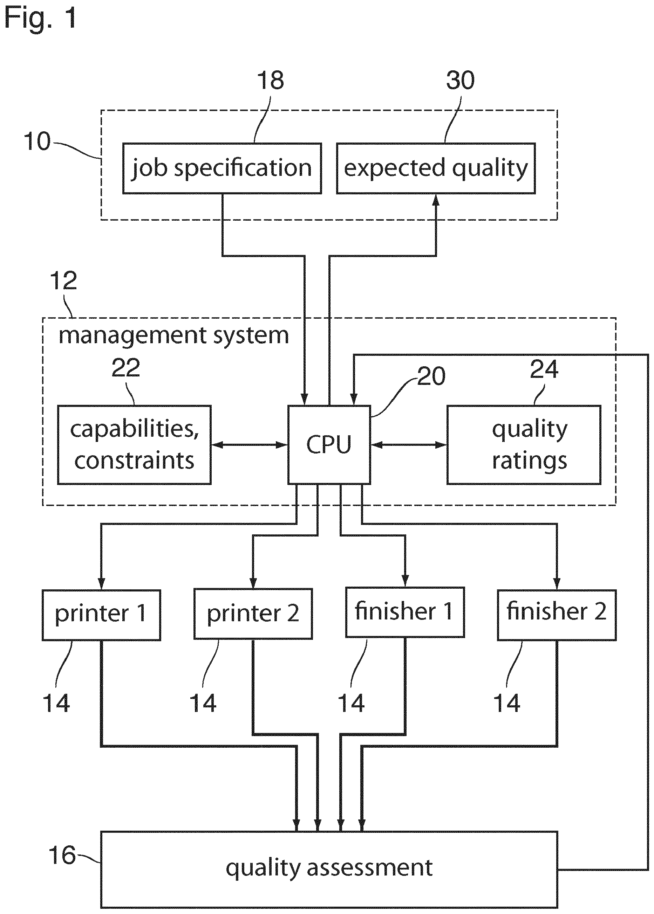

As is shown in Fig. 1, an image reproduction system comprises a user interface 10, an electronic job management system 12, and a collection of processing units 14 which, in this example, comprises two printers "printer 1" and "printer 2" and two finishers "finisher 1" and "finisher 2". It may be assumed that the image reproduction system further comprises a sheet conveying system (not shown) that is capable of conveying printed sheets from each of the two printers to any of the two finishers, so that any combination of printers and finishers is selectable for processing a given print job.

In the example shown, the image reproduction system further comprises a quality assessment desk 16 which may physically be arranged in close proximity to the user interface 10.

As is well known in the art, the user interface 10 may comprise several types of input and output ports such as network links, a keyboard, a touch screen, an LCD display and the like and permits a user to enter job specifications 18 and data for print jobs to be processed, as well as commands for controlling the processing operations to be performed.

The electronic job management system 12 has a central processing unit (CPU) 20 communicating with the user interface 10 for receiving the job data, the job specifications 18 and the commands, and which also communicates with the processing units 14 in order to control their operations. The CPU 20 further communicates with a memory 22 storing capabilities and constraints of each of the processing units 14. For example, in case of a printer, capabilities stored in the memory 22 may relate to the capability of forming color prints, the colors of available inks or toners, and the like. Another example of a capability would be the capability to form duplex prints or the capability to process sheets in both, A3 and A4 formats. An example of a constraint could be that A3 sheets can be processed only in a certain orientation. The latter example, relating to the sheet format and sheet orientation, may also apply to a finisher, and then the constraints concerning the orientation of the sheets may be compatible or conflicting.

Another example of a capability of a finisher would be the capability to staple stacks of printed sheets. Then a related constraint might be that the thickness of the stack of sheets must not be larger than 5 mm, for example.

When a print job is submitted via the user interface 10, the CPU 20 parses the job specification 18 in order to identify the capabilities that are required for performing the job. The CPU further checks whether, among the processing units 14 that are available in the system, there exists a selection of processing units (a printer or a combination of a printer and a finisher) which has the required capabilities. If no such selection exists, the user is advised via the user interface that the job must be rejected.

Otherwise, the CPU 20 reads the constraints of the selected processing units and checks whether the attributes contained in the job specification 18 match the constraints. For example, an attribute in the job specification 18 may specify that the printed copies consist each of 100 sheets of 80 g paper and shall be stapled. Then, there may be a mismatch with the constraint limiting the thickness of the stack of sheets.

If the CPU 20 has found at least one selection of processing units which has the required capabilities and for which all attributes match the related constraints, the CPU will instruct the selected processing units to perform the print job. If no such selection is found, the job is rejected. However, even if the attributes in the job specification match all constraints, so that the job does not have to be rejected, the attributes may be such that they approach certain physical limits of the processing units involved, so that the print products obtained may be only of a relatively poor quality.

The management system 12 is capable of alerting the user if quality problems of this type are to be expected. To that end, the CPU 20 communicates also with a memory 24 storing quality ratings for at least some of the processing units 14 and/or combinations of processing units. Each quality rating applies to a specific processing operation to be performed by the pertinent processing unit(s), and if the operation is characterized further by certain values of one or more attributes in the job specification, then the quality rating applies only to a specific value of the attribute and a specific combination of attribute values, respectively. The memory 24 may be al local memory or a cloud service shared with other image reproduction systems.

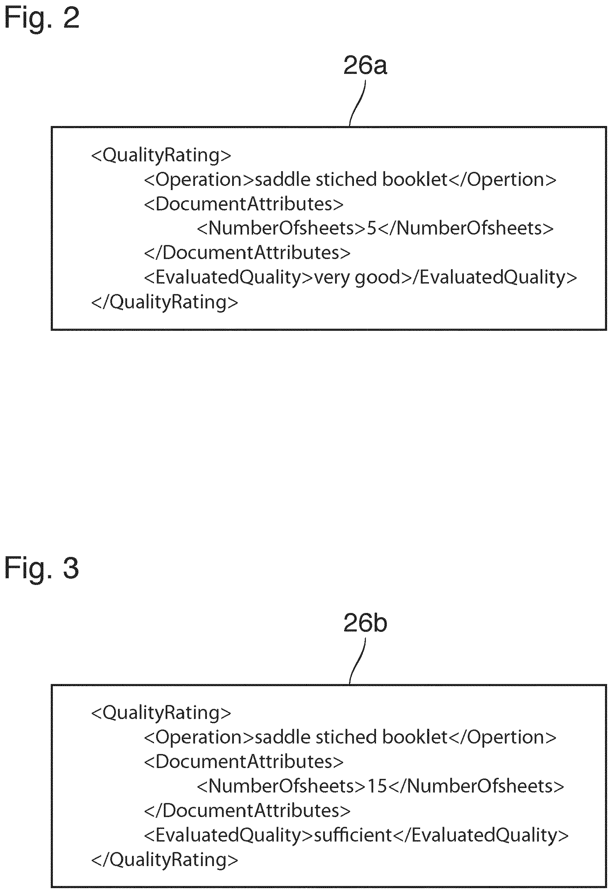

An example of a specific quality rating 26a is shown in Fig. 2. In this example, the quality rating is represented as a XML file. The processing operation to which this quality rating applies is the finishing operation of forming a saddle stitched booklet, as is indicated in the second line in Fig. 2. This operation is characterized further by a number of attributes one of which is the number of sheets that constitute the booklets ("NumberOfSheets"). As is indicated in the fourth line in Fig. 2, the quality rating 26a applies specifically to an attribute value "5" of this attribute, i.e. to a saddle stitching operation for forming a booklet with five sheets.

The sixth line in Fig. 2 reports that the quality of print products resulting from this operation has been evaluated earlier ("EvaluatedQuality") and has been found to be "very good", which is the highest score in a set of quality values ("very good", "good", "sufficient", "bad", "very bad") which is used universally for all quality ratings.

As another example, Fig. 3 shows a quality rating 26b for the same operation "saddle stitched booklet" and the same attribute "number of sheets", but this time with a different attribute value "15". As could be expected, the quality degrades as the number of sheets of the booklet increases, so that the "EvaluatedQuality" in the quality rating 26b is only "sufficient".

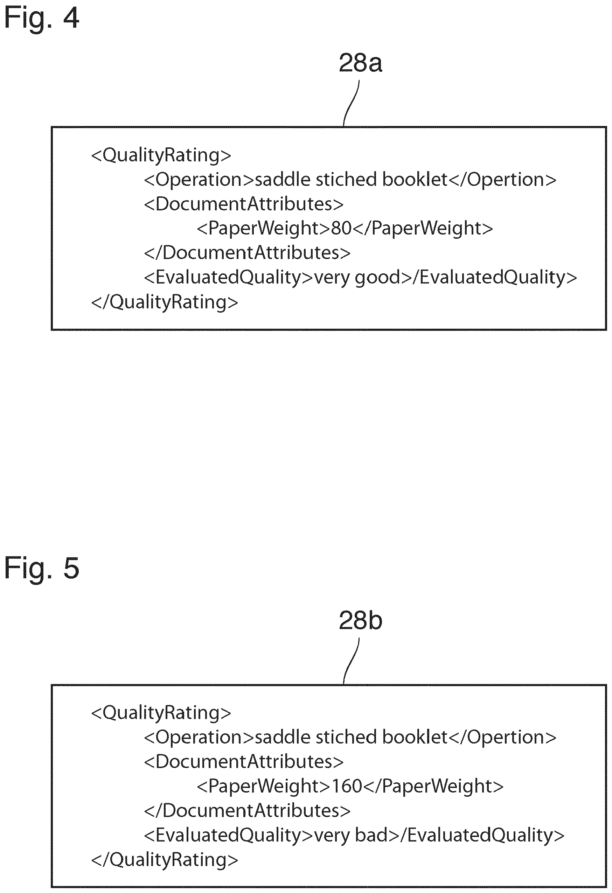

Figs. 4 and 5 show examples of quality ratings 28a, 28b for the same operation "saddle stitched booklet" but for another attribute "PaperWeight" that characterizes this operation and indicates the quality of the sheets in form of their weight per unit area. In the quality rating 28a (Fig. 4), the attribute value of this attribute is "80", i.e. the sheets consist of paper with a weight of 80 g/m², and the evaluated quality for this attribute value is "very good". In contrast, in the quality rating 28b (Fig. 5), the attribute value for the paperweight is "160", and the evaluated quality is "very bad".

It shall now be assumed that the job specifications 18 for a print job require the operation "saddle stitched booklet" with the attribute values "10" for the number of sheets and the attribute value "120" for the paper weight. It shall further be assumed that the only quality ratings that are available in the memory 24 for this operation and these attributes are the ratings shown in Figs. 2 to 5. Thus, no quality rating is available for the specific attribute value "10" for the number of sheets. However, it is possible to estimate an expected quality value by interpolating between the quality ratings 26a and 26b in Figs. 2 and 3. Since the attribute value "10" is in the middle between the attribute values "5" and "15", for which quality ratings are available, the result of the interpolation would be "good" which is the middle between the evaluated qualities "very good" and "sufficient" in the quality ratings.

Analogously, an estimate can be made for the attribute value "120" of the paperweight. In this case, interpolation between the quality ratings 28a (paperweight 80, evaluated quality "very good") and the quality rating 28b (paper weight 120, evaluated quality "very bad") would result in "sufficient".

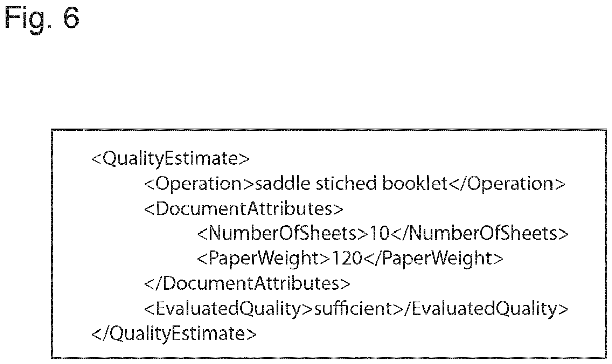

It is observed that the results of the two interpolations, "good" in the first case and "sufficient" in the second case, are not consistent. It is conceivable however that the overall quality of the print product will be given by the lowest quality score for all the attributes that have to be considered. Thus, in this example, the estimate for the expected quality value is "sufficient". This quality estimate has been shown in Fig. 6, again in the XML format.

In this way, the CPU 20 can calculate an expected quality value 30 (Fig. 1) for each operation and each set of attributes for which quality ratings are available in the memory 24, and the expected quality value 30 can be indicated to the user on the display of the user interface 10.

More generally, the job specification 18 may specify more than one operation to be performed. Then the CPU 20 calculates a quality estimate for each operation, and if these quality estimates are different, their minimum will be displayed on the user interface 10 as the expected quality value 30.

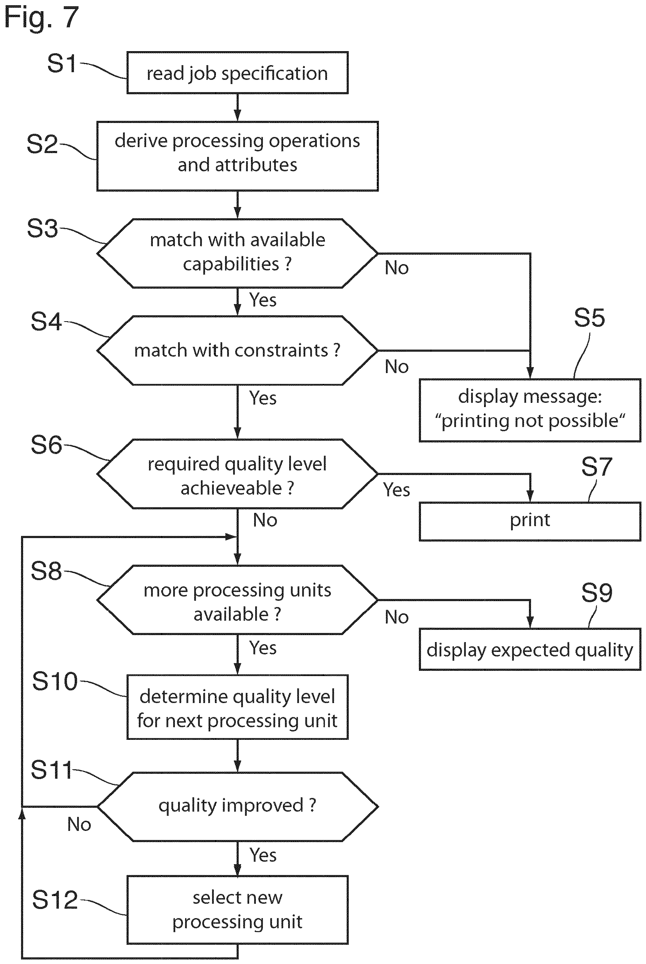

Examples of job management methods to be performed with the management system 12 will now be explained in conjunction with the flow diagrams shown in Figs. 7 to 9.

As is shown in Fig. 7, when a print job is submitted to the management system 12, the job specifications are read in step S1 and the necessary processing operations and their attributes are derived from the job specifications in step S2.

In step S3, the management system checks whether the required processing operations match the available capabilities, i.e. whether there exists at least one selection of processing units 14 which has the required capabilities.

If this is the case, it is checked in step S4 whether the related attributes match the constraints that have been stored in the memory 22 for the selected processing units.

If the result is "no" either in step S3 or in step S4, the print job cannot be handled, and a message "printing not possible" is displayed on the user interface 10 in step S5.

On the other hand, if the result in both steps S3 and S4 was "yes", it is checked in step S6 whether a pre-defined required quality level is achievable. Thus, in this embodiment, a minimum quality level, e.g. "sufficient" has been set in advance in the management system. The step S6 involves determining an expected quality value for the processing operations and attributes as given in the job specification, on the basis of the quality ratings stored in the memory 24, in accordance with the principles that have been described above.

If the minimum quality level can be achieved ("yes"), the print job is accepted and the print and finishing processing is started in step S7, using a default selection of processing units, e.g. the processing units which provide the highest productivity from among the processing units that have passed the tests in steps S3 and S4.

If the result in step S6 is "no", it is checked in step S8 whether other processing units are available, i.e. whether there is another selection of processing units which pass the checks in step S3 and S4. If this is not the case ("no"), this means that, although the job can be processed, the pre-set quality requirements cannot be fulfilled. In this case, the expected quality value ("bad" or "very bad") that has been determined in step S6 is displayed via the user interface in step S9, so that the user may decide whether or not he wants to have the job printed nevertheless.

If other processing units are available ("yes" in step S8), an expected quality value for a next one of the possible selections of processing units is determined in step S10, and it is checked is step S11 whether this quality value is better than the former one. If this is the case ("yes"), the corresponding processing unit is selected for printing in step S12, whereafter the process loops back to step S8. If the answer is "no" in step S11, the step S12 is skipped. Thus, when the loop is exited in step S9, the selection of printing units which yields the best result will have been identified, and the quality value of that selection is displayed.

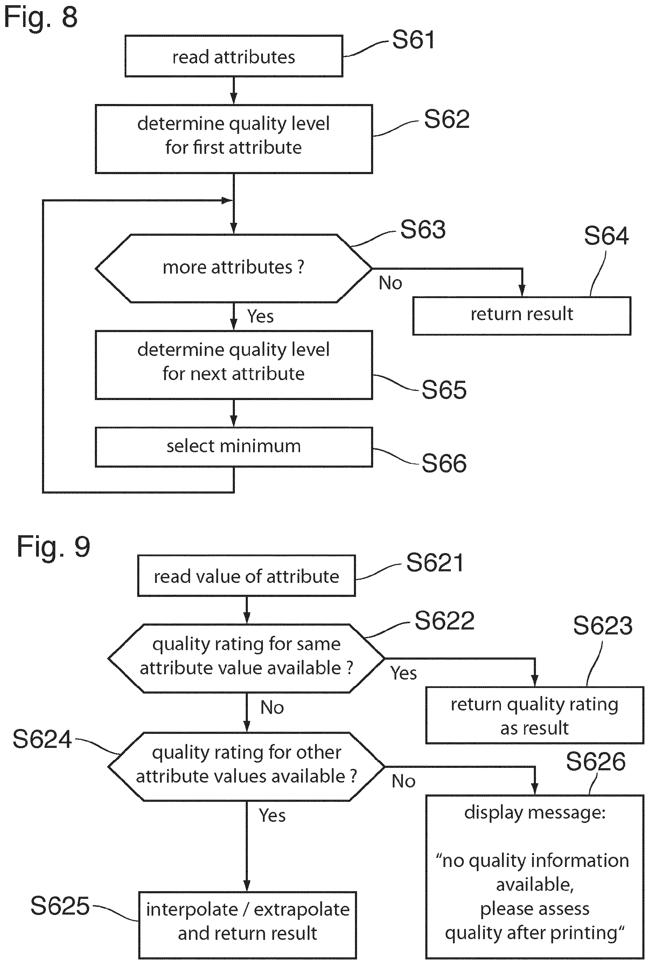

Fig. 8 shows details of an example of a sub-routine that may be used in steps S6 and S10 for determining the expected quality value.

For simplicity, it shall be assumed that there is only a single processing operation that needs to be considered.

In step S61, the attributes that are related to this operation and the respective attribute values are read from the job specification. Step S62 is a step of determining a quality level for a first of these attributes, based on the related attribute value. Then, it is checked in step S63 whether there are more attributes that are linked to the required operation. If this is not the case ("no"), the result obtained in step S62 is returned as the expected quality value in step S64.

On the other hand, if there are more than one attribute for the present operation, the quality level for the next attribute is determined in step S65, and the minimum of the quality levels that have been determined so far is selected in step S66, whereupon the process returns to step S63 to check whether there are still more attributes to be considered. When all attributes have been processed in this way, the result (minimum of all results) is returned in step 64.

Fig. 9 shows an example of a sub-routine that may be used in steps S62 and S65 in Fig. 8 for determining the quality levels.

The value of the attribute (selected in step S62 or S65) is read in step S621, and in step S622 it is checked whether a quality rating for the same attribute value is available in the memory 24. If this is the case ("yes"), the "EvaluatedQuality" specified in the quality rating constitutes the expected quality value and is returned in step S623.

On the other hand, if no quality rating is available for the particular attribute value, it is checked in step S624 whether quality ratings for other attribute values of the same attribute are available. If this is the case ("yes"), the expected attribute value is determined from these quality ratings by interpolation (or extrapolation) as has been described in conjunction with Figs. 2 to 5.

If the result in step S624 is "no", this means that the available quality ratings do not permit a quality estimate, and a message "no quality information available, please assess quality after printing" is displayed via the user interface in step S626.

If the step S626 is reached while performing the step S6 in Fig. 7, it is of course possible to suspend the step S626 and to continue with step S8 in order to try other processing units for which quality ratings may possibly be available. Then, the step S626 will be reached only when all possible selections of processing units have been tested and no selection has been found that will fulfill the pre-set quality requirement.

In the message displayed in step S626, the invitation "please assess quality after printing" encourages the user to inspect the quality of the print product on the quality assessment desk 16 (Fig. 1) after the printed copies have been discharged from one of the finishers or directly from one of the printers. The user may then visually inspect the printed copies and may enter his quality rating ("very good" or "good", etc.) into the memory 24, possibly via the user interface 10, and the CPU 20 will assure that a new quality rating of the type shown in Figs. 2 to 4 is stored for the processing operation and the attribute values that had been specified in the job specification. In this way, the collection of quality ratings in the memory 24 may be extended continuously as long as the image reproduction system is in use.

The format for entering the quality assessment at the user interface 10 may again be XML, for example, and the quality assessment may be embedded in an extended version of the well-known Job Definition Format (JDF). This format might also be used for specifying a minimum quality requirement in the job specification 18.

Of course, the user may also enter a new quality rating even in a case where a quality rating for the same operation and the same attribute values existed already in the memory 24. The CPU 20 may then replace the new rating by the former one or calculate a sliding average of the last few ratings or may store a history of the ratings. Such history would then also show a possible drift in the quality due to aging of the processing units.

## Claims

1. An electronic job management system (12) for an image reproduction system comprising a plurality of processing units (14) for forming print products, the management system being arranged to:
- store a set of capabilities and capability constraints for each processing unit (14);
- receive a job specification (18) for a print job;
- derive required processing operations and attributes from the job specification; and
- check whether the required processing operations and attributes match the capabilities and constraints of at least one selection of processing units from the processing units (14) available in the image reproduction system,
wherein the management system is further arranged to:
- store quality ratings (26a, 26b, 28a, 28b) for each of a plurality of different combinations of processing units, processing operations and attributes, each quality rating having a value selected from among at least three different values; and
- if the check for matching processing operations and attributes was successful for at least one selection of processing units, and if at least one quality rating is available for that selection in combination with the processing operations and attributes, determine, on the basis of the stored quality ratings (26a, 26b, 28a, 28b), an expected quality value (30) for the resulting print products, and
wherein the plurality of processing units comprises at least one printer and at least one finisher.

2. The management system according to claim 1, wherein the stored quality ratings (26a, 26b, 28a, 28b) and the expected quality value (30) comprise quality values selected from a finite set of quality values each of which is associated with a specific numerical value.

3. The management system according to claim 2, being arranged to determine the expected quality value (30) by selecting a minimum from among a plurality of quality values that have been determined for a plurality of attributes, if the processing operation is **characterized by** more than one attribute.

4. The management system according to claim 2 or 3, being arranged to determine the expected quality value (30) by inter-/extrapolation from a plurality of stored quality ratings (26a, 26b, 28a, 28b) for attribute values that are different from the attribute value specified in the job specification (18).

5. The job management system according to any of the claims 2 to 5, being arranged to determine a selection of processing units (14) for which the expected quality value is highest among all possible selections of processing units for which the capabilities and constraints match the job specification.

6. The job management system according to any of the preceding claims, arranged to prompt a user to enter quality ratings for jobs that have been processed.

7. The job management system according to any of the preceding claims, arranged to display the expected quality value via a user interface (10).

8. A method of job management in an image reproduction system comprising a plurality of processing units (14) for forming print products, the method comprising the steps of:
- storing a set of capabilities and capability constraints for each processing unit (14);
- receiving a job specification (18) for a print job;
- deriving required processing operations and attributes from the job specification; and
- checking whether the required processing operations and attributes match the capabilities and constraints of at least one selection of processing units from the processing units (14) available in the image reproduction system,
wherein the method comprises the further steps of:
- storing quality ratings (26a, 26b, 28a, 28b) for each of a plurality of different combinations of processing units, processing operations and attributes, each quality rating having a value selected from among at least three different values; and
- if the check for matching processing operations and attributes was successful for at least one selection of processing units, and if at least one quality rating is available for that selection in combination with the processing operations and attributes, determining, on the basis of the stored quality ratings (26a, 26b, 28a, 28b), an expected quality value (30) for the resulting print products, and
wherein the plurality of processing units comprises at least one printer and at least one finisher.

9. A non-transitory software product comprising program code on a machine readable medium, the program code, when run on a processing unit of a job management system (12) for an image reproduction system, causes the processing unit to perform the method according to claim 8.
